# EUROPÄISCHE PATENTSCHRIFT

(11) **EP 2 767 097 B1**
(45) Veröffentlichungstag und Bekanntmachung des Hinweises auf die Patenterteilung: **25.10.2017**
(21) Anmeldenummer: 12759685.6
(22) Anmeldetag: 13.09.2012
(51) Int. Cl.: H04Q 9/00, G06F 21/85, G08C 25/00, H04L 29/06

(54) **KOMMUNIKATIONSSYSTEM FÜR EIN KRAFTFAHRZEUG**
COMMUNICATION SYSTEM FOR A MOTOR VEHICLE
SYSTÈME DE COMMUNICATION POUR UN VÉHICULE À MOTEUR

(30) Priorität: 11.10.2011 DE 102011084254
(43) Veröffentlichungstag der Anmeldung: 20.08.2014
(73) Patentinhaber: ZF Friedrichshafen AG, 88046 Friedrichshafen (DE)
(72) Erfinder: KÜHNL, Jörg, 92729 Weiherhammer (DE)
(86) Internationale Anmeldenummer: PCT/EP2012/067899
(87) Internationale Veröffentlichungsnummer: WO 2013/053562

(56) Entgegenhaltungen:
- EP-A1- 1 369 306
- EP-A2- 1 473 614
- KARL KOSCHER ET AL: "Experimental Security Analysis of a Modern Automobile", IEEE SYMPOSIUM ON SECURITY AND PRIVACY (SP), 2010, 16. Mai 2010 (2010-05-16), Seiten 447-462, XP031705100, IEEE, PISCATAWAY, NJ, USA ISBN: 978-1-4244-6894-2
- BELL R: "Introduction & revision of IEC 61508", MEASUREMENT AND CONTROL, Bd. 42, Nr. 6, 1. Juli 2009 (2009-07-01), XP002686883, INSTITUTE OF MEASUREMENT AND CONTROL UK ISSN: 0020-2940

## Beschreibung

Die vorliegende Erfindung betrifft ein Kommunikationssystem für ein Kraftfahrzeug gemäß dem Oberbegriff von Anspruch 1.

In Kraftfahrzeugen gewinnt die Kommunikation deren elektronischer Komponenten untereinander, insbesondere unter Einbeziehung von Steuergeräten, ständig an Bedeutung. Insbesondere rückt hierbei neben der reinen Intra-Fahrzeug-Kommunikation die Inter-Fahrzeug-Kommunikation bzw. die Kommunikation mit der Umgebung zunehmend in den Vordergrund, s. z.B. Karl Koscher et al.: "Experimental Security Analysis of a Modern Automobile", 2010, IEEE SYMPOSIUM ON SECURITY AND PRI-VACY (SP), NJ, USA, 16. Mai 2010 (2010-05-16), Seiten 447-462, XP031705100, ISBN: 978-1-4244-6894-2. Zu kommunizierende Daten können einer Telemetrieeinheit, insbesondere in Form einer Telemetriebox, übermittelt werden, welche hierzu mit Informationsquellen und Senken vernetzt ist, d.h. leitungslos und/oder leitungsgebunden. Über eine solche Telemetrieeinheit kann z.B. ein Flottenmanagement realisiert werden, z.B. für Nutzkraftfahrzeuge oder Busse.

Bei einem derartigen Kommunikationssystem der vorliegenden Art, bei welchem Steuergerätdaten von einer Telemetrie-Endstelle abgefragt werden, insbesondere leitungsgebunden, werden neben einem bloßen Auslesen der Daten aus Steuergeräten, z.B. Wartungs- und Servicemanagement-Daten, im Rahmen bestimmter Applikationen, z.B. im Falle eines erkannten Diebstahls des Kraftfahrzeugs, infolge dessen nur mehr im ersten Gang geschaltet werden kann, auch Schreibzugriffe der Telemetriebox auf das Steuergerät notwendig. Hierbei ist das Risiko bezüglich der funktionalen Sicherheit jedoch als hoch zu bewerten, z.B. SIL>=2 bzw. ASIL>=B. Dieses muss durch geeignete Hardware- und Softwareadaptionen in der Telemetriebox, insbesondere entsprechend der IEC 61508 bzw. ISO 26262, abgefangen werden.

Bei aufwändig realisierten Telemetrieboxen, welche insbesondere mit einer Vielzahl von Schnittstellen ausgestattet sind, z.B. auf einem Intel Prozessor mit einem Linux Betriebssystem aufsetzen, ist diese Sicherheitsimplementierung jedoch äußerst kostspielig zu realisieren.

Zur Steigerung der Sicherheit ist aus den Druckschriften EP 1 369 306 A1 und EP 1 473 614 A2 je ein Kraftfahrzeugkommunikationssystem mit einer Firewall bekannt geworden, wobei eine Bus-Kommunikation zwischen Endstellen jedoch nicht überwacht wird.

Ausgehend hiervon liegt der vorliegenden Erfindung die Aufgabe zugrunde, ein Kommunikationssystem anzugeben, welches diese Nachteile überwindet und unter Bereitstellung der erforderlichen funktionalen Sicherheit insbesondere kostengünstig zu realisieren ist.

Diese Aufgabe wird erfindungsgemäß durch die Merkmale des Anspruchs 1 gelöst. Vorteilhafte Ausführungsformen und Weiterbildungen sind Gegenstand der Unteransprüche.

Vorgeschlagen wird erfindungsgemäß ein Kommunikationssystem für ein Kraftfahrzeug, wobei das Kommunikationssystem eine Telemetrie-Endstelle, insbesondere mit einer Vielzahl von Schnittstellen, sowie eine Kraftfahrzeugsteuergerät-Endstelle aufweist. Das Kommunikationssystem kann hierbei als verteiltes System realisiert sein, d.h. das sowohl die Telemetrie-Endstelle als auch die Kraftfahrzeugsteuergerät-Endstelle eigenständige Computer darstellen, welche über Nachrichten miteinander kommunizieren. Das Kommunikationssystem ist allgemein bevorzugt Bestandteil des Kraftfahrzeugs, welches z. B. ein Nutzkraftfahrzeug, ein Personenkraftfahrzeug, ein Bus oder ein davon verschiedenes Kraftfahrzeug sein kann.

Die Telemetrie-Endstelle kann als Telemetriezentrale, insbesondere als Telemetriebox gebildet sein und z. B. Schnittstellen für USB, Ethernet, Video Out, Audio Out, WLAN, 3G wie z. B. UMTS, GSM, und Diagnose sowie bedarfsabhängig weitere aufweisen, so dass neben einer Intra-Fahrzeug-Kommunikation insbesondere auch eine Kommunikation mit der Umgebung über die Telemetrie-Endstelle ermöglicht ist. Vorgesehen ist im Rahmen der vorliegenden Erfindung, die Telemetrie-Endstelle für einen zentralisierten Informationsumschlag bzw. eine Informationsverarbeitung von das Kraftfahrzeug und/oder dessen Komponenten betreffenden Informationen zu nutzen, insbesondere zur Weitergabe von derartiger Information an die Umgebung bzw. externe Empfänger.

Um einen umfangreichen Funktionsvorrat bereitstellen zu können, ist die Telemetrie-Endstelle bevorzugt computerisiert bzw. prozessorgestützt ausgebildet. Bei einer bevorzugten Ausführungsform der Telemetrie-Endstelle setzt dieselbe zum Beispiel auf einem Intel Atom Prozessor mit 10-Hubs auf und beinhaltet ein Linux Betriebssystem.

Die Kraftfahrzeugsteuergerät-Endstelle ist bevorzugt mittels eines Kraftfahrzeugsteuergeräts gebildet, insbesondere mittels eines Getriebesteuergeräts. Alternativ kann die Kraftfahrzeugsteuergerät-Endstelle mittels eines Motorsteuergeräts oder eines davon verschiedenen Steuergeräts des Kraftfahrzeugs gebildet sein.

Das Kommunikationssystem bzw. Kraftfahrzeug-Kommunikationssystem weist weiterhin einen Bus auf, über welchen die Endstellen untereinander kommunizieren bzw. Nachrichten übermitteln. Der Bus ist bevorzugt ein CAN-Bus, an welchem die Endstellen über entsprechende Schnittstellen angebunden sind. Alternativ sind andere Busformen denkbar, zum Beispiel ein proprietärer Bus oder ein LIN-Bus.

Um die geforderte funktionale Sicherheit im Kommunikationssystem zwischen den Endstellen bzw. im Datenverkehr zwischen denselben auf einfache Weise realisieren zu können, wird im Rahmen der vorliegenden Erfindung vorgeschlagen, dass das Kommunikationssystem eine Firewall aufweist, welche die Kommunikation bzw. die Nachrichtenübermittlung zwischen den Endstellen überwacht. Hierdurch kann vorteilhaft davon abgesehen werden, aufwändige Hardware- und Softwarelösungen zur Implementierung der funktionalen Sicherheit auf die Telemetrie-Endstelle anzuwenden. Die Begrifflichkeit "Firewall" umfasst hierbei vorliegend Softwarelösungen im Sinne von Firewall-Software als auch Hardware-Software-Lösungen, z. B. eigenständige Firewall-Vorrichtungen, welche gemeinhin auch als "externe Firewall" bezeichnet werden.

Die Firewall ist bevorzugt als Bus-Firewall, insbesondere als CAN-Firewall, in den Bus zwischen den Endstellen eingebunden, insbesondere über je eine Busschnittstelle mit der Telemetrie-Endstelle und/oder der Kraftfahrzeugsteuergerät-Endstelle verbunden. Vorgeschlagen wird insbesondere, die Firewall als externe Firewall, bevorzugt im Rahmen einer eigenständigen Plattform bzw. mittels eigenständiger Hardware / Software auszubilden. Die Firewall ist hierbei bevorzugt mittels eines Mikrocontrollers und wenigstens zweier Busschnittstellen zur Anbindung an die Telemetrie-Endstelle und die Kraftfahrzeugsteuergerät-Endstelle gebildet. Alternativ kann die Firewall integral mit der Telemetrie-Endstelle gebildet sein, i.e. gemäß einer Personal-Firewall, oder z. B. auch als bloße Software-Firewall gebildet sein.

Bei einer bevorzugten Ausführungsform der Erfindung ist vorgesehen, dass die Firewall mittels einer Überwachungseinheit des Kommunikationssystems, insbesondere einem Watchdog, betriebsüberwacht wird. Derart kann die funktionale Sicherheit weiter erhöht werden. Die Überwachungseinheit kann Bestandteil der Firewall sein oder davon getrennt gebildet sein.

Vorgesehen ist insbesondere, dass die Firewall die Schreibzugriffe der Telemetrie-Endstelle auf die Kraftfahrzeugsteuergerät-Endstelle überwacht. Hierdurch kann sichergestellt werden, dass kein Schreibzugriff ausgehend von der Telemetrie-Endstelle auf die Kraftfahrzeugsteuergerät-Endstelle erfolgt, welcher deren funktionale Sicherheit gefährdet.

Die Firewall-Überwachung der Kommunikation und insbesondere der Schreibzugriffe erfolgt bevorzugt mittels einer White List, i.e. einer Liste bzw. Tabelle zugelassener Befehle und Wertebereiche bzw. Regeln, deren Inhalt die Firewall abfragen kann. Die White List kann hierzu geeignet hinterlegt sein, z. B. in einem Speicher. Erhält die Firewall einen Schreibzugriffsbefehl von der Telemetrie-Endstelle, kann diese anhand der White List prüfen, ob dieser Befehl zugelassen ist und eine korrespondierende Regel auf die Kommunikation anwenden. Wird die Zulässigkeit bejaht, kann die Firewall den Befehl an die Kraftfahrzeugsteuergerät-Endstelle weiterleiten.

Zur Erhöhung der Sicherheit ist weiterhin vorgesehen, dass die Firewall Datenpakete in Richtung zur Kraftfahrzeugsteuergerät-Endstelle vor Weitergabe an dieselbe analysiert und codiert bzw. modifiziert. Hierzu können Nutzdaten von der Firewall zum Beispiel mit einem Header, zusätzlichen Daten, zum Beispiel einem Zeitstempel, einem Sicherheitscode und einem Übertragungscode ergänzt werden. Mittels derart modifizierter Daten können weitere, schützende Filterfunktionen in der Kommunikation zwischen den Endstellen über die Firewall implementiert werden, z. B. eine Verifizierung oder Authentifizierung mittels einer Prüfsumme.

Bei einer weiterhin bevorzugten Ausführungsform der Erfindung ist vorgesehen, dass die Firewall die Fehlerbehandlung bei der Kommunikation von der Telemetrie-Endstelle zur Kraftfahrzeugsteuergerät-Endstelle innerhalb des Kommunikationssystems übernimmt. Hierbei können z. B. die Fehlerarten:
- Wiederholen derselben Nachricht,
- Auslassen von unbeabsichtigten Nachrichten,
- Einfügen von unbeabsichtigten Nachrichten,
- Vertauschen von Nachrichten
- Verfälschung von Nachrichten
- Verzögerung von Nachrichten
- Manipulation von Nachrichten
von der Firewall erkannt werden. Hierzu kann die Firewall Filterfunktionalitäten aufweisen, welche applikationsspezifisch ausgebildet sind. Ergänzend können hierzu in der Firewall z. B. IDS- oder IPS-Funktionalitäten integriert sein, i.e. Intrusion Detection System- oder Intrusion Prevention System-Funktionalität.

Weitere Merkmale und Vorteile der Erfindung ergeben sich aus der nachfolgenden Beschreibung von Ausführungsbeispielen der Erfindung, anhand der Figur der Zeichnung, die erfindungswesentliche Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert. Es zeigt:

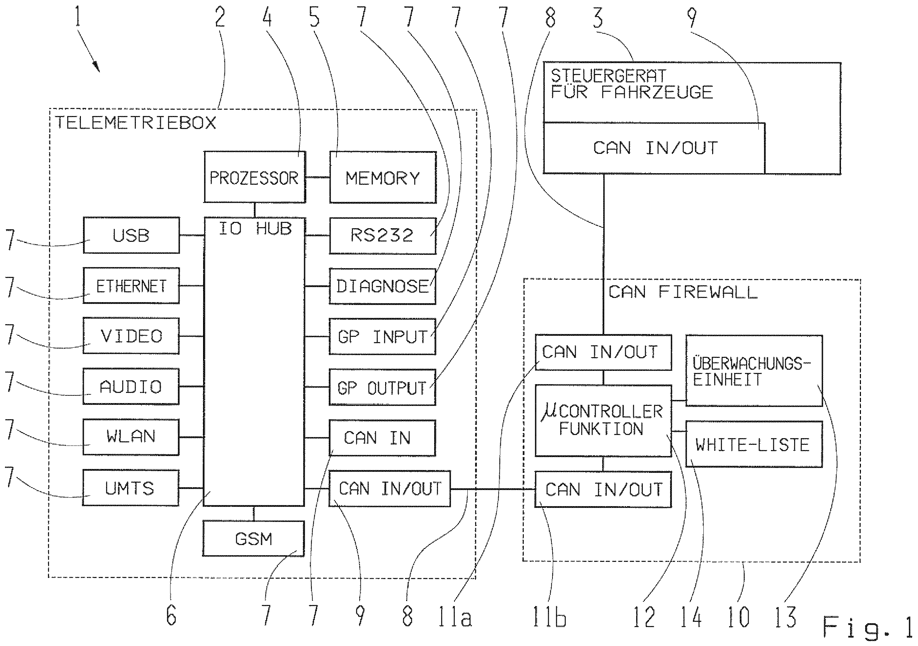

- Fig. 1: exemplarisch und schematisch ein Kommunikationssystem gemäß einer möglichen Ausführungsform der Erfindung.

In den nachfolgenden Figurenbeschreibungen sind gleiche Elemente bzw. Funktionen mit gleichen Bezugszeichen versehen.

Fig. 1 zeigt exemplarisch und schematisch ein Kommunikationssystem 1 für ein Kraftfahrzeug mit einer Telemetrie-Endstelle 2, welche durch eine Telemetriebox gebildet ist, sowie einer Kraftfahrzeugsteuergerät-Endstelle 3 in Form eines Steuergeräts, insbesondere eines Getriebesteuergeräts.

Die Telemetriebox 2 ist mittels eines Intel Atom Prozessors 4 mit einem Linux-Betriebssystem einschließlich zugehörigem Speicher 5 sowie eines 10-Hubs 6 gebildet und weist eine Vielzahl von Schnittstellen 7 auf, insbesondere eine USB-, eine Ethernet-, eine Video-, eine Audio-, eine WLAN-, eine UMTS-, eine RS232-, eine Diagnose, eine GP-Input-, eine GP-Output-, eine CAN-In- und eine GSM-Schnittstelle.

Über die Vielzahl von Schnittstellen 7 können der Telemetrie-Endstelle 2 Informationen, insbesondere Betriebszustände des Kraftfahrzeugs und dessen Komponenten betreffend, mikroprozessorgesteuert zugeführt werden, z. B. über die Diagnose und die CAN-In-Schnittstelle, bzw. von dieser ausgegeben werden, z. B. über die UMTS und GSM-Schnittstelle, insbesondere an wenigstens eine übergeordnete Koordinationseinheit, z. B. eine Flottenmanagement-Leitstelle. Aufgabe der Telemetriebox bzw. Telemetrie-Endstelle 2 ist es hierbei auch, Fahrzeugdaten bzw. fahrzeugspezifische Information auszulesen und auszuwerten, i.e. zu verarbeiten, insbesondere Daten von der Kraftfahrzeugsteuergerät-Endstelle 3.

Im Rahmen des Kraftfahrzeug-Kommunikationssystems 1 kommunizieren die Telemetriebox 2 und das Kraftfahrzeugsteuergerät 3 über einen fahrzeugeigenen CAN-Bus 8 miteinander, wozu dieselben je eine CAN-Schnittstelle 9 aufweisen, welche eine bidirektionale Kommunikation unterstützt.

Zur Überwachung der Kommunikation zwischen der Telemetriebox 2 und der Steuergerät-Endstelle 3 ist eine Firewall 10 in den CAN-Bus 8 zwischen den Schnittstellen 9 von Telemetriebox 2 und Steuergerät-Endstelle 3 integriert. Die CAN-Firewall 10 weist eine erste 11a und eine zweite 11b bidirektionale CAN-Schnittstelle auf, mittels derer die Anbindung sowohl an die Telemetriebox 2 als auch die Steuergerät-Endstelle 3 über den CAN-Bus 8 realisiert ist. Die Kommunikation bzw. der Datenverkehr zwischen Telemetriebox 2 als auch Steuergerät-Endstelle 3 wird somit sämtlich über die Firewall 10 abgewickelt.

Die Firewall 10 ist als eigenständige Hardware-Plattform gebildet, insbesondere als externe Firewall, wobei die Firewall-Funktionalität softwareunterstützt implementiert ist. Die abgeschlossene Firewall-Plattform 10 weist neben vorstehend beschriebenen CAN-Schnittstellen 11a, b einen Mikrocontroller 12 auf, welcher von einer Überwachungseinheit 13 in Form eines Safety-Mikrocontrollers mit Watchdog betriebsüberwacht wird. Der Mikrocontroller 12 greift zur Umsetzung der Firewall-Filterfunktionalitäten auf einen Regelvorrat zurück, welcher in einem Speicher hinterlegt ist, i.e. auf eine White List bzw. weiße Liste 14.

Erhält die CAN-Firewall 10 einen schreibenden CAN-Befehl von der Telemetriebox 2, prüft die Firewall 10 anhand der White List 14, ob dieser Befehl zugelassen ist. Bei Zulässigkeit kann der Schreibzugriff auf die Kraftfahrzeugsteuergerät-Endstelle 3 erfolgen, der Befehl wird an die Steuergerät-Endstelle 3 weitergeleitet.

In der Firewall 10 sind weiterhin Prüfmechanismen implementiert, um auch Systemeingriffe zumindest erkennen zu können, insbesondere auch eine IDS- und/oder IPS-Funktionalität. Kommunizierte Nutzdaten werden hierzu seitens der Firewall ergänzt, insbesondere mit einem Header, zusätzlichen Daten, z. B. einem Zeitstempel, sowie einem Sicherheitscode und Übertragungscode. Eine auf den ergänzten Daten basierend gebildete Prüfsumme ermöglicht nunmehr eine Verifikation und/oder eine Authentifikation.

Die CAN-Firewall 10 übernimmt im Rahmen der Kommunikation mit der Steuergerät-Endstelle 3 auch das Fehlerhandling. Erkannt werden hierdurch das Wiederholen derselben Nachricht, das Auslassen von beabsichtigten Nachrichten, das Einfügen von unbeabsichtigten Nachrichten, das Vertauschen von Nachrichten, die Verfälschung von Nachrichten, die Verzögerung von Nachrichten und die Manipulation von Nachrichten.

Angemerkt sei, dass das Kommunikationssystem 1 nicht auf vorstehend beschriebene zwei Endstellen 2, 3 beschränkt ist. Es kann im Rahmen der vorliegenden Erfindung auch vorgesehen sein, die Bus-Kommunikation mehrerer Steuergerät-Endstellen 3 je mit der Telemetrie-Endstelle 2 über die Firewalll 0 oder eine Mehrzahl von Firewalls 10 zu überwachen, insbesondere den Schreibzugriff der Telemetrie-Endstelle 2 auf die Steuergerät-Endstellen 3.

### Bezugszeichen

- 1: Kommunikationssystem
- 2: Telemetrie-Endstelle
- 3: Kraftfahrzeugsteuergerät-Endstelle
- 4: Prozessor
- 5: Speicher
- 6: IO-Hub
- 7: Schnittstelle 2
- 8: CAN-Bus
- 9: CAN-Schnittstelle
- 10: Firewall
- 11a, b: CAN-Schnittstelle 9
- 12: Mikrocontroller 9
- 13: Überwachungseinheit 9
- 14: White List

## Patentansprüche

1. Kommunikationssystem (1) für ein Kraftfahrzeug, wobei das Kommunikationssystem (1) eine Telemetrie-Endstelle (2), insbesondere mit einer Vielzahl von Schnittstellen (7), sowie eine Kraftfahrzeugsteuergerät-Endstelle (3) aufweist, wobei das Kommunikationssystem (1) weiterhin einen Bus (8), über welchen die Endstellen (2, 3) untereinander kommunizieren, umfasst, wobei das Kommunikationssystem (1) eine Firewall (10) aufweist, welche die Kommunikation zwischen den Endstellen (2, 3) überwacht, und wobei die Firewall (10) mittels einer Überwachungseinheit (13), insbesondere einem Watchdog, betriebsüberwacht wird.

2. Kommunikationssystem (1) nach Anspruch 1, **dadurch gekennzeichnet, dass** die Firewall (10) Schreibzugriffe der Telemetrie-Endstelle (2) auf die Kraftfahrzeugsteuergerät-Endstelle (3) überwacht.

3. Kommunikationssystem (1) nach einem der vorhergehenden Ansprüche, **dadurch gekennzeichnet, dass** die Firewall (10) in den Bus (8) zwischen den Endstellen (2, 3) eingebunden ist, insbesondere über je eine Busschnittstelle (10a, b) mit der Telemetrie-Endstelle (2) und/oder der Kraftfahrzeugsteuergerät-Endstelle (3) verbunden ist.

4. Kommunikationssystem (1) nach einem der vorhergehenden Ansprüche, **dadurch gekennzeichnet, dass** die Firewall (10) als externe Firewall oder integral mit der Telemetrie-Endstelle (2) gebildet ist.

5. Kommunikationssystem (1) nach einem der vorhergehenden Ansprüche, **dadurch gekennzeichnet, dass** die Firewall (10) Kommunikationsregeln auf die überwachte Kommunikation anwendet, insbesondere mittels einer hinterlegten White List (14).

6. Kommunikationssystem (1) nach einem der vorhergehenden Ansprüche, **dadurch gekennzeichnet, dass** die Firewall (1) Nutzdaten der Kommunikation vor Weitergabe an eine Endstelle (2, 3) ergänzt.

7. Kommunikationssystem (1) nach einem der vorhergehenden Ansprüche, **dadurch gekennzeichnet, dass** die Firewall (10) die Fehlerbehandlung bei der Kommunikation von der Telemetrie-Endstelle (2) zur Kraftfahrzeugsteuergerät-Endstelle (3) übernimmt.

8. Kommunikationssystem (1) nach einem der vorhergehenden Ansprüche, **dadurch gekennzeichnet, dass** die Firewall (10) als eigenständige Plattform gebildet ist, insbesondere mittels eines Mikrocontrollers (12).

9. Kommunikationssystem (1) nach einem der vorhergehenden Ansprüche, **dadurch gekennzeichnet, dass** der Bus (8) ein CAN-Bus und/oder die Telemetrie-Endstelle (2) eine Telemetriebox ist und/oder die Kraftfahrzeugsteuergerät-Endstelle (3) ein Kraftfahrzeugsteuergerät, insbesondere ein Getriebesteuergerät, ist.

## Claims

1. Communication system (1) for a motor vehicle, wherein the communication system (1) has a telemetry terminal point (2), in particular with a multiplicity of interfaces (7), and a motor vehicle control unit terminal point (3), wherein the communication system (1) also comprises a bus (8) via which the terminal points (2, 3) communicate with one another, wherein the communication system (1) has a firewall (10) which monitors the communication between the terminal points (2, 3), and wherein the firewall (10) is operationally monitored by means of a monitoring unit (13), in particular a watchdog.

2. Communication system (1) according to Claim 1, **characterized in that** the firewall (10) monitors writing access operations of the telemetry terminal point (2) to the motor vehicle control unit terminal point (3).

3. Communication system (1) according to one of the preceding claims, **characterized in that** the firewall (10) is integrated in the bus (8) between the terminal points (2, 3), in particular is connected via, in each case, one bus interface (10a, b) to the telemetry terminal point (2) and/or the motor vehicle control unit terminal point (3).

4. Communication system (1) according to one of the preceding claims, **characterized in that** the firewall (10) is formed as an external firewall or is formed integrally with the telemetry terminal point (2).

5. Communication system (1) according to one of the preceding claims, **characterized in that** the firewall (10) applies communication rules to the monitored communication, in particular by means of a stored white list (14).

6. Communication system (1) according to one of the preceding claims, **characterized in that** the firewall (1) adds useful data to the communication before transfer to a terminal point (2, 3).

7. Communication system (1) according to one of the preceding claims, **characterized in that** the firewall (10) carries out the error handling during the communication between the telemetry terminal point (2) and the motor vehicle control unit terminal point (3).

8. Communication system (1) according to one of the preceding claims, **characterized in that** the firewall (10) is formed as an independent platform, in particular by means of a microcontroller (12).

9. Communication system (1) according to one of the preceding claims, **characterized in that** the bus (8) is a CAN bus and/or the telemetry terminal point (2) is a telemetry box and/or the motor vehicle control unit terminal point (3) is a motor vehicle control unit, in particular a gearbox control unit.

## Revendications

1. Système de communication (1) pour un véhicule automobile, le système de communication (1) comportant un terminal télémétrique (2), notamment avec une pluralité d'interfaces (7), ainsi qu'un terminal d'instrument de commande du véhicule automobile (3), le système de communication (1) comportant en outre un bus (8), via lequel les terminaux (2, 3) communiquent entre eux, le système de communication (1) comportant un pare-feu (10), lequel supervise la communication entre les terminaux (2, 3) et le pare-feu (10) étant contrôlé en fonctionnement au moyen d'une unité de supervision (13), notamment d'un chien de garde.

2. Système de communication (1) selon la revendication 1, **caractérisé en ce que** le pare-feu (10) contrôle des accès en écriture du terminal télémétrique (2) dans le terminal d'instrument de commande du véhicule automobile (3).

3. Système de communication (1) selon l'une quelconque des revendications précédentes, **caractérisé en ce que** le pare-feu (10) est intégré dans le bus (8), entre les terminaux (2, 3), notamment est connecté via chaque fois une interface de bus (10a, b) avec le terminal télémétrique (2) et/ou le terminal d'instrument de commande du véhicule automobile (3).

4. Système de communication (1) selon l'une quelconque des revendications précédentes, **caractérisé en ce que** le pare-feu (10) est conçu en tant que pare-feu externe ou intégralement avec le terminal télémétrique (2).

5. Système de communication (1) selon l'une quelconque des revendications précédentes, **caractérisé en ce que** le pare-feu (10) applique à la communication supervisée des règles de communication, notamment au moyen d'une liste blanche (14) sauvegardée.

6. Système de communication (1) selon l'une quelconque des revendications précédentes, **caractérisé en ce que** le pare-feu (1) complète des données utiles de la communication, avant la retransmission à un terminal (2, 3).

7. Système de communication (1) selon l'une quelconque des revendications précédentes, **caractérisé en ce que** le pare-feu (10) prend en charge le traitement des erreurs lors de la communication du terminal télémétrique (2) vers le terminal d'instrument de commande du véhicule automobile (3).

8. Système de communication (1) selon l'une quelconque des revendications précédentes, **caractérisé en ce que** le pare-feu (10) est conçu en tant que plateforme autonome, notamment au moyen d'un microcontrôleur (12).

9. Système de communication (1) selon l'une quelconque des revendications précédentes, **caractérisé en ce que** le bus (8) est un bus CAN et/ou le terminal télémétrique (2) est un module télémétrique et/ou le terminal d'instrument de commande du véhicule automobile (3) est un instrument de commande de véhicule automobile, notamment un instrument de contrôle de la boîte de vitesses.
